# EUROPEAN PATENT APPLICATION

(11) **EP 1 288 774 A2**
(43) Date of publication of application: **05.03.2003**
(21) Application number: 02255629.4
(22) Date of filing: 13.08.2002
(51) Int. Cl.: G06F 3/06

(54) **Integrated drive controller for systems with integrated mass storage**

(30) Priority: 30.08.2001 US 943242
(71) Applicant: STMicroelectronics, Inc., Carrollton, TX 75006-5039 (US)
(72) Inventor: Lin, Wen, Longmont, Colorado 80503 (US)
(74) Representative: Style, Kelda Camilla Karen

(57) **Abstract**

A computing system having a processor with a data/control bus interface. A data/control bus implements one or more device communication channels. A data memory is coupled to the processor and a mass storage device having an interface for communicating mass storage transactions is provided. A controller having a memory interface is coupled to the data memory and a mass storage interface coupled to the mass storage device's interface and operable to conduct mass storage transactions between the data memory and the mass storage device.

## Description

### BACKGROUND OF THE INVENTION

### 1. Field of the Invention.

The present invention relates, in general, to mass storage devices, and, more particularly, to software, systems and methods for efficiently implementing mass storage control in systems with integrated mass storage.

### 2. Relevant Background.

Computing systems generally comprise one or more data processors, memory, and mass data storage. The processors comprise, for example, microprocessors and microcontrollers that may be implemented as stand-alone integrated circuits, or as an embedded processor core with peripheral components to provide special-purpose functionality. While memory is often integrated with the processing component(s), mass storage is typically implemented as separate hardware. These components are coupled by various busses and/or network mechanisms.

In operation, computing systems function to implement program behavior by manipulating data. These manipulations involve moving data from one location to another and performing mathematical operations on the data. The processing component accesses instructions that are stored in software and/or firmware in the system's memory and mass storage components. The processor executes the programmed instructions, receives data from external sources, and provides manipulated data to input/output (I/O) devices of almost unlimited variety.

Although traditional computing systems such as personal computers are familiar tools in offices and homes, a large an increasing portion of the computing system market is implemented in integrated systems and computing appliances that perform special purposes. These computing systems are used, for example, to provide "set-top boxes" for television, telephone and Internet access in homes and offices. Other examples include devices, especially portable devices, that record and/or play digitized music and video such as MP3 and MPEG players. Televisions, telephones, and any number of other common appliances are expected to benefit from the integration of processing power, memory and mass storage.

A typical computing system architecture implements a microprocessor to perform the bulk data processing functions. The microprocessor is coupled to external components or peripherals by a system bus. The processor communicates with the peripherals by exchanging messages on the system bus via a chip set that supports the system bus signaling protocols. The system bus runs at significantly slower speeds than the microprocessor, but is suitably fast for communication with most peripherals. Because the system bus is comparatively slow, modern computer systems have a separate, faster bus for communicating with memory.

Turning specifically to the development of mass storage devices, there is a long tradition of implementing such devices as peripherals communicating through the slower system bus. This is largely because of the specialized mechanical nature of mass storage systems and the significantly slower rates at which data moves in a mass storage component as compared to a microprocessor. Mass storage devices such as hard disk drives have evolved to include a significant amount of processing power and memory within the drive mechanism itself. Typical devices, including integrated drive electronics (ATA/IDE, or more commonly IDE) interface, small computer system interface (SCSI) drives, universal serial bus (USB) interface, and others include dedicated processors, memory and firmware/software operating independently of the "host" data processor to provide access to data stored on disks. These various interfaces provide standard interfaces to a system bus to make drives of various manufacturers more interchangeable. However, these interfaces increase the cost of hard drives by adding more circuitry to control hard disk accesses through the multiple interface layers.

Recent improvements in processing speed and power have enabled both host processors and embedded or special-purpose processors to handle a great number of instructions per second. However, bus interface and network technology have not advanced commensurately. As a result, a typical computing system having a high-speed host processor is coupled to a disk drive system having another high-speed processor through a relatively low speed IDE, USB, or SCSI interface.

Among other features, the drive interfaces abstract or hide details and complexity of the drive mechanism so that the system bus and host processor need only be aware of a carefully defined command set and total available storage in order to use the hard drive. The electronics within the drive and the interface handle converting the host access requests into commands that position and activate the read/write head mechanisms over appropriate portions of the media. However, the low-speed interface or network connection is a bottleneck that can limit overall system performance as well as increasing system cost. Moreover, the interface requires silicon devices coupled on either side of the connection that increase cost and reduce reliability of the system.

Using conventional components, a host processor implements instructions that access hard disk storage. Often, a processor may include a direct memory access controller (DMAC) that monitors specified ranges of the host processor's memory address space and executes the transaction with slower peripherals such as the hard disk drive system. This allows the host processor to continue executing instructions while the DMA controller handles the slower disk access processes. The DMA architecture requires a set of hardware and software/firmware integrated with or attached to the host processor and a complementary set of hardware and software/firmware in the disk drive mechanism itself. DMA adds another layer of components and further complexity, as well as latency in some cases, to the processes of communicating between mass storage and a host processor.

Particularly in the case of special-purpose computing appliances, this complexity results in expense that does not always improve performance in the operating product. A set-top box, for example, having hard drive storage will have two microprocessors because the mass storage is provided separately from the programmable data processor that provides the set-top box functionality. The second processor is often required primarily to manage the host interface (i.e., the ATA/IDE or SCSI interface device). A single processor could provide sufficient processing power to implement all of the functionality. However, current system and component architectures that isolate hard drive functionality from the host processor functionality prevent such efficient use of processing capabilities.

Accordingly, a need exists for a system architecture and component architecture that enables efficient implementation of data processing capability, particularly in integrated systems. A further need exists for a communication method for transferring data efficiently with minimal interface electronics between a host processor and a mass storage system, particularly hard disk drive systems.

### SUMMARY OF THE INVENTION

Briefly stated, the present invention involves a computing system having a processor with a data/control bus interface. A data/control bus implements one or more device communication channels. A data memory is coupled to the processor and a mass storage device having an interface for communicating mass storage transactions is provided. A controller having a memory interface is coupled to the data memory and a mass storage interface coupled to the mass storage device's interface and operable to conduct mass storage transactions between the data memory and the mass storage device.

### BRIEF DESCRIPTION OF THE DRAWINGS

Fig. 1 shows a prior art computing system emphasizing interfaces between functional components;
Fig. 2 shows a computing system in which the present invention is implemented emphasizing interfaces between functional components;
Fig. 3 illustrates functional components of an exemplary mass storage device in accordance with the present invention;
Fig. 4 illustrates functional components of an exemplary data processing system that may be used in accordance with the present invention;
Fig. 5 shows an exemplary embodiment of the present invention in functional block-diagram form;
Fig. 6 shows an alternative embodiment of the present invention in functional block-diagram form; and
Fig. 7 shows another alternative embodiment of the present invention in functional block-diagram form.

### DETAILED DESCRIPTION OF THE PREFERRED EMBODIMENTS

The present invention involves mass storage systems that are more closely coupled to host system processing than is currently feasible with standardized interface electronics. The present invention is illustrated and described in terms of a hard disk drive control system with an input/output (I/O) mechanism that supports close coupling to a processor via a coupling to system bus, memory, and/or local bus interfaces that exist in conventional computer systems. However, the present invention may be implemented by providing dedicated, special-purpose interfaces to drive control electronics as an alternative. Moreover, other mass storage systems such as tape drives, optical drives, solid state storage, and the like that are conventionally coupled through standardized interfaces to host computer systems.

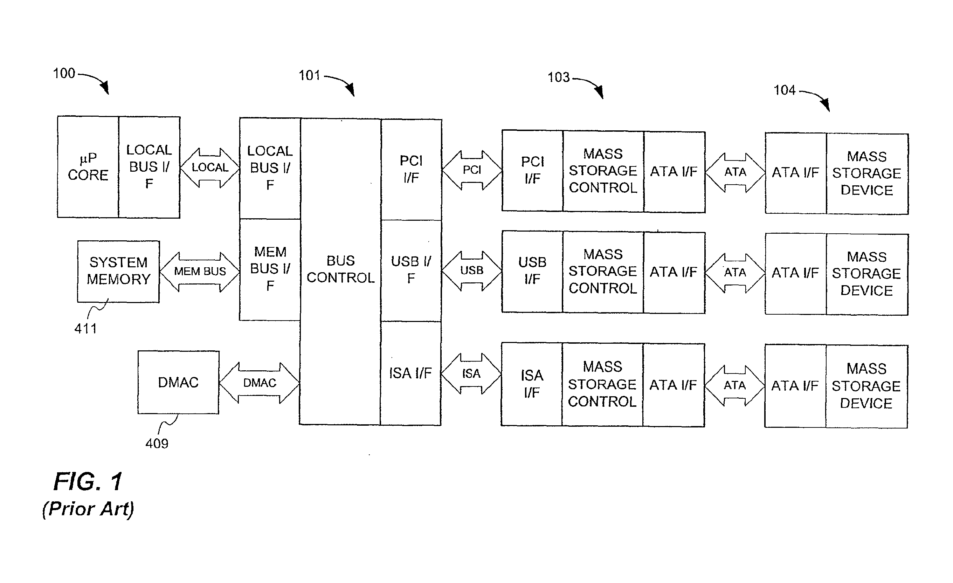

Fig. 1 shows a prior art computing system emphasizing interfaces between functional components. The is a wide variety of specific architectures in both general purpose and embedded computer systems that are available. The system illustrated in Fig. 1 generalizes many computer system features for purposes of understanding the present invention, however, it should be understood that some variation will be found in almost any particular computer system implementation. In general, a processor 100 comprises computing resources, such as a microprocessor core, that implements software application behaviors. The processor core comprises one or more instruction execution units such as adders, multipliers, accumulators, that perform operations on supplied data according to programmed instructions. Processor 100 includes local bus interface mechanisms that communicate with external devices through one or more I/O pins that communicate data, address, and control information over what is often termed a "host bus" or "local bus" as shown in Fig. 1.

Bus controller 101 is coupled to the local bus through its own local bus interface and acts as a bridge to downstream bus mechanisms such as a PCI bus, USB bus, ISA bus and the like. Other bus architectures such as the accelerated graphics processor (AGP) bus may also be used in some implementations. In each case, the bus control mechanism 101 includes controller logic, buffer memory, connection logic and the like to implement a physical and link layer connection between the local bus and the particular downstream bus mechanism(s) that are in use. As shown in Fig. 1, the connection logic may include a local bus interface, a memory bus interface, a PCI interface, a USB interface, an ISA interface as well as others.

The controller logic is used to control bus state and arbitrate amongst devices coupled to the bus for access to the bus, among other functions. For purposes of discussion, the downstream bus mechanisms are sometimes referred to as a "system bus" or "peripheral bus" and other names. It is common in microcomputer systems to implement bus controller 101 as one or more integrated circuits called a "chip set" that interface with a general purpose microprocessor. In embedded systems, the functionality of both the microprocessor 100 and the bus controller 101 may be implemented in a single chip.

Commonly, bus controller 101 implements an interface to system memory 411 that may include one or more levels of cache memory as well as working memory used to store data and instructions for currently executing software programs. Alternatively, system memory can be coupled directly to the microprocessor core using a memory controller unit within the microprocessor core. To improve performance in some applications, a direct memory access controller (DMAC) 409 is also coupled to the bus controller. DMAC 409 is mapped to a specified range of the address space available and executes data transfers between system memory 411 and devices coupled to the downstream busses so that the processor 100 does not need to expend processing resources on these memory transfers.

Mass storage is conventionally implemented using any of the downstream busses such as the PCI, USB, and/or ISA busses. A mass storage controller 103 may, for example, be provided as a card inserted into a PCI or ISA bus slot, or as a USB interface layer build into an external hard drive. Alternatively, the mass storage controller 103 may be implemented in the chip set coupled to the microprocessor, or in circuitry within an embedded microcontroller.

Essentially, the mass storage controller functions as a bridge between the data rates and data formats presented on the system bus(s) to the data rates and formats required by the interface to mass storage devices 104. The interfaces (e.g., the PCI bus interface, USB interface, ISA interface, and ATA interface in Fig. 1) provide physical and link layer connectivity to the associated busses. Optionally, mass storage controllers may implement various processes to improve availability and/or reliability such as RAID (redundant array of independent devices) processes.

The mass storage controllers 103 include an interface to the standard mass interface of mass storage devices 104. In Fig. 1, the ATA interface is the only standard interface shown, however, SCSI is a widely available standardized interface as well. The mass storage bus, often implemented as a cable coupled to an interface port of a hard drive enclosure, couples to a complementary ATA interface within the mass storage mechanism 104. The ATA interface converts the received signals into control signals that activate and move the read/write head to particular locations. The ATA interface normally hides the details of the physical geometry and defect profiles of the mass storage device from other upstream systems.

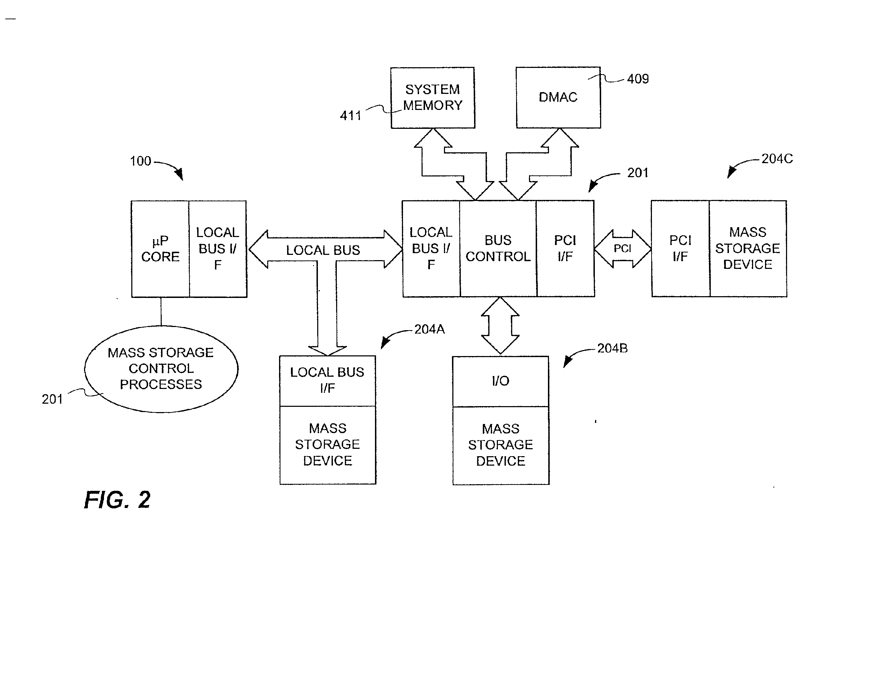

Fig. 2 shows a computing system in which the present invention is implemented emphasizing interfaces between functional components. Microprocessor 100 is preferably similar to a conventional microprocessor described hereinbefore. In contrast to the implementation of Fig. 1, the main processor 100 is preferably used to implement mass storage control processes 201. Mass storage control processes 201 implement some or all of the behaviors previously implemented within mass storage controller 103 and the interface of mass storage mechanisms 104. Mass storage processes 201 may be implemented in software, firmware, or hardware associated with processor 100 to meet the needs of a particular application.

As in the conventional system shown in Fig. 1, processor 100 communicates through a local bus to a bus controller mechanism 201 which may implement a system bus such as a PCI bus as shown in Fig. 2. A significant feature of the present invention is that mass storage mechanisms 204A, 204B and 204C are coupled to upstream busses and connections so as to eliminate one or more of the interface crossings that occur in the conventional implementation of Fig. 1. It should be noted that the DMAC and memory interfaces are not shown in Fig. 2, but would be implemented in a substantially conventional manner.

For example, mass storage mechanism 204A includes a local bus interface that couples directly to local bus 204. Mass storage device 204B includes an I/O mechanism that enables coupling to system memory 411 through a memory controller, DMAC unit 409, or directly to a dedicated interface of bus controller 201. Mass storage mechanism 204C includes a PCI interface that enables direct coupled to the PCI bus thereby eliminating the ATA interface mechanisms. In each case, one or more interface crossings are eliminated thereby eliminating some of the hardware required to support the interfaces.

In each case, the mass storage mechanisms 204A-204C are outfitted with a special purpose I/O or interface mechanism that supports coupling to the particular bus or device. However, this interface is contemplated to be no more complex than existing ATA implementations. These interfaces should support some manner of bus arbitration if such functionality is not already implemented in the bus. In preferred implementations, these interface mechanisms support direct memory access operations.

In some implementations, bus controller 201 may be implemented as an off-the-shelf bridge device such as a chip set or portion of a chip set that complements the processor 100. In other implementations, bus controller 201 may include a dedicated interface to a mass storage device such as device 204B. Preferably, the bus controller 201 supports coupling to DMAC unit 409 and system memory 411. In embedded systems, bus controller 201 may be manufactured as a part of an integrated circuit with processor 100.

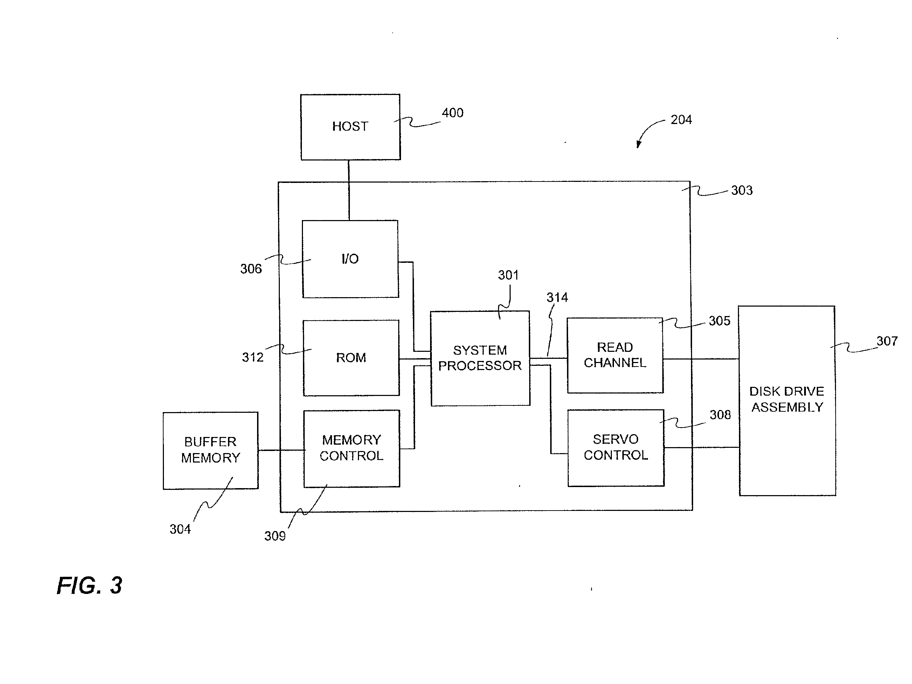

Fig. 3 illustrates functional components of an exemplary mass storage device in accordance with the present invention. In the illustration of Fig. 3, the element "HOST" 400 refers generally to the main processor components coupled to via any of the interfaces shown in Fig. 2. Host 400 includes functionality of the bus controller 201 where used. Disk drive system 204 includes a system processor 301 that processes requests and commands from host computer 400 that direct drive system to perform specific behavior involving disk drive assembly 307. Examples include reading and writing data to disk drive assembly 307, providing state information such as defect tables, error status, and the like. Disk controller unit 303 preferably includes data processing capacity as well as memory in the form of ROM 312 and buffer memory 304 to generate responses to received commands and requests. The generated responses return data, state information, and/or error codes depending on the particular operation being performed.

Disk drive assembly 307 implements physical mass storage typically on a plurality of magnetic disks and read/write head electronics for transferring data with the disks. Disk drive assembly 307 typically includes read channel hardware for preprocessing and amplifying data read from the magnetic media as well as a spin motor for spinning the disks, and voice coil motor (VCM) for positioning the read/write head electronics at specific locations with respect to the disk surface(s).

Servo control 308 generates drive signals that control the VCM and/or spin motors. These drive signals are in the form of precision current signals that drive the motors directly. Host 400 sends write commands and data via controller 303 to write data onto the disks as well as read commands to retrieve previously written data from disks within disk drive assembly 307. On both read and write operations the data transmitted from the host 400 to the disk controller 303 includes an indication of a specific location or set of locations on the disk drive assembly 307 that contains the data that is to be accessed.

The data that is exchanged through disk controller 303 is typically buffered in buffer memory 304 that is accessible via memory controller 309 and subsequently transmitted to disk assembly 307 or host 400. Buffer memory 304 is used to overcome differences between the speed at which host 400 operates as compared to the speed at which disk assembly 307 operates. In place of or in addition to buffer memory 304, a cache memory may be implemented by appropriate changes (e.g., tag management, hit/miss detection, and the like) to memory controller 309.

Although many of the components shown in Fig. 3 resemble conventional drive components, I/O portion 306 is specifically designed to interface with a high level bus such as the host or local bus, PCI bus, memory bus, or bus controller interface. In conventional drive systems, I/O portion 306 presents a standard ATA/IDE or SCSI interface. It is an intent of the present invention to eliminate this standard interface.

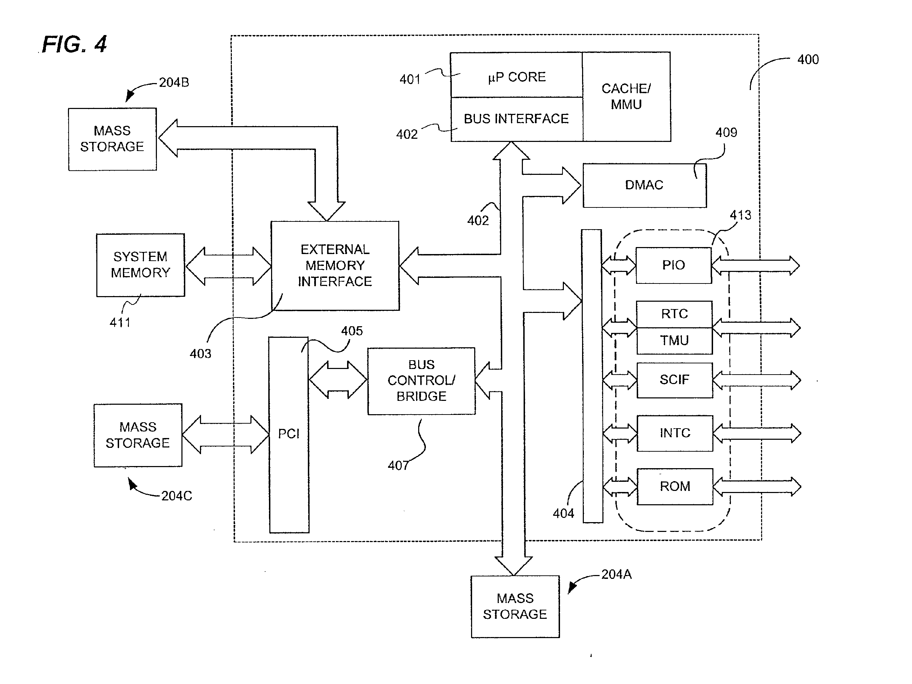

Fig. 4 illustrates functional components of an exemplary data processing system that may be used in accordance with the present invention. Fig. 4 shows components of a host 400 in what might be an embedded processor configuration such that all of the components shown within the dashed outline of host 400 are implemented on a single piece of silicon. One module in a data processing system is a central processor unit (CPU) core 401. The CPU core 401 includes, among other components (not shown), execution resources (e.g., arithmetic logic units, registers, control logic) and cache memory. These functional units perform the functions of fetching instructions and data from memory, preprocessing fetched instructions, scheduling instructions to be executed, executing the instructions, managing memory transactions, and interfacing with external circuitry and devices.

CPU core 401 communicates with other components shown in FIG. 2 through a host bus 402. Bus 402 couples to a variety of system components, and may be exposed through I/O pins to external devices. Of particular importance are components that implement interfaces with external hardware such as external memory interface unit 403, PCI bridge 407, and peripheral bus 404.

External memory interface 403 provides an interface between the system bus 402 and an external main memory subsystem 411. The external memory interface 403 comprises a port to system bus 402 and a DRAM controller (not shown) for example. The organization of interconnects in the system illustrated in FIG. 4 is guided by the principle of optimizing each interconnect for its specific purpose. The bus system 402 interconnect facilitates the integration of several different types of sub-systems. The peripheral subsystem 404 supports bus standards which allow easy integration of hardware of types indicated in reference to FIG. 1 through interface ports 413. PCI bridge 407 provides a standard interface that supports expansion using a variety of PCI standard devices that demand higher performance that available through peripheral port 404. The system bus 402 may be outfitted with an expansion port which supports the rapid integration of application modules without changing the other components of system 400.

In accordance with the present invention, mass storage 204A may be coupled directly to local bus 402, mass storage 204B to memory interface 403, or mass storage 204C through PCI bus 405. Some of these connections may require dedicated hardware I/O pins on the device to provide a suitable interface. However, in each case the standard mass storage interface layer is eliminated by coupling host resources directly to the mass storage interface.

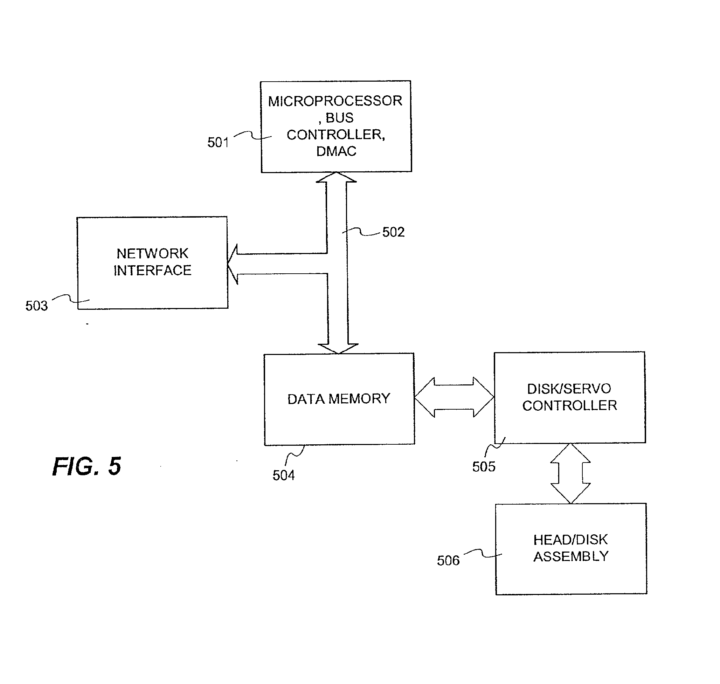

Fig. 5 shows an exemplary embodiment of the present invention in functional block-diagram form. In the embodiment of Fig. 5, a microprocessor 501 comprising a microprocessor core, bus controller, and DMAC units presents an interface to a host bus 502. The host bus 502 may be proprietary to the microprocessor design, or may be a standardized bus such as a PCI bus. Optionally, a network interface unit 503 is coupled to host bus 502 to provide network connectivity. Network interface unit 503 may connect to Ethernet, Fibre channel, ISDN, DSL or other network architectures.

Host bus 502 also couples to data memory 504 that provides system memory resources, as well as an interface to a disk/servo controller 505 of a hard disk drive system. For example, data memory may include a memory controller unit that implements the interface to bus 502, and serves to arbitrate access to memory locations between bus 502 and disk/servo controller 505. Alternatively, data memory 504 may be implemented as dual-ported memory allowing simultaneous access by both host bus 502 and disk/servo controller 505. In a particular implementation, a portion of the memory address space implemented by data memory 504 is allocated to disk/servo controller 505 so that data memory 504 buffers data from microprocessor 501 and disk/servo controller 505 reads in the data from the allocated memory portion at a rate that is compatible with head/disk assembly 506.

In operation, any amount of the conventional disk control functionality and behavior may be implemented by processes executing in microprocessor 501. At one extreme, disk/servo controller provides defect mapping, buffering, and logical-to-physical address mapping in a substantially conventional manner. At another extreme, all of these functions are implemented by processes executing in microprocessor 501 such that microprocessor 501 is aware of the physical geometry, defect mapping, and performance characteristics of the head/disk assembly 506. In the later case, microprocessor 501 generates commands akin to a conventional disk drive controller chip that are received by the servo controller 505. The servo control mechanisms convert the commands into analog servo signals that drive the motors and read/write electronics of head/disk assembly 506.

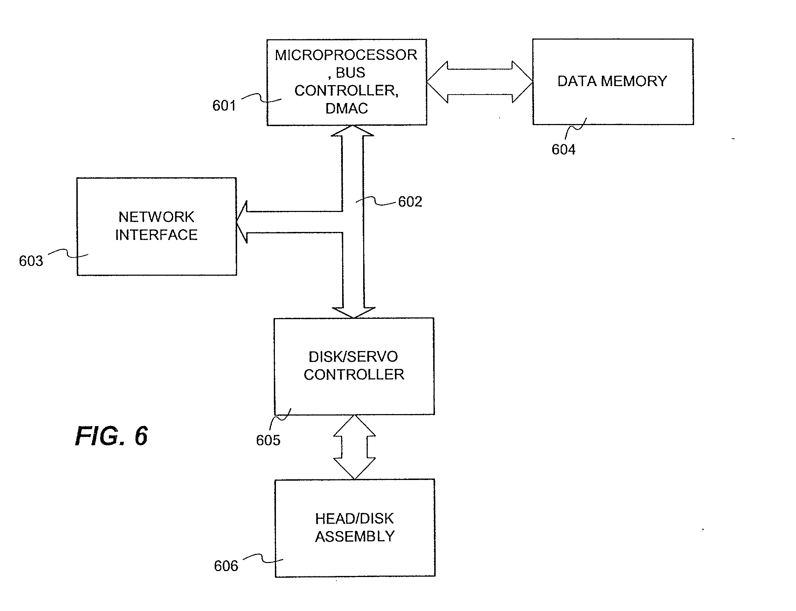

Fig. 6 shows an alternative embodiment of the present invention in functional block-diagram form. In this embodiment, microprocessor 601 has a host bus 602 that is exposed to external devices and a memory bus that couples directly to system memory 604. In such an architecture, all memory operations move through processor 601, although they may be handled by an integrated DMAC unit within microprocessor 601. It is not uncommon for some or all memory to be implemented on a separate bus from the system bus 602 to achieve higher memory throughput.

In the embodiment shown in Fig. 6, optional network interface 603 and disk/servo controller 605 are coupled to the host bus 602. Host bus 602 may be implemented as a proprietary bus, or as a standard bus such as a PCI bus. Like the embodiment shown in Fig. 5, disk/servo controller 605 generates signals that control the motors and head electronics in head/disk assembly 606. In operation, a portion of data memory 604 is allocated to disk operations. To exchange data between microprocessor 601 and disk/servo controller 605, data is written to the allocated portion. The data may be written directly, or may be written under control of the DMAC unit. Alternatively, microprocessor 601 may communicate directly to disk/servo controller 605, although this may result in inefficient operation as the data rate acceptable to disk/servo controller 605 may be significantly below data transfer rate of microprocessor 601.

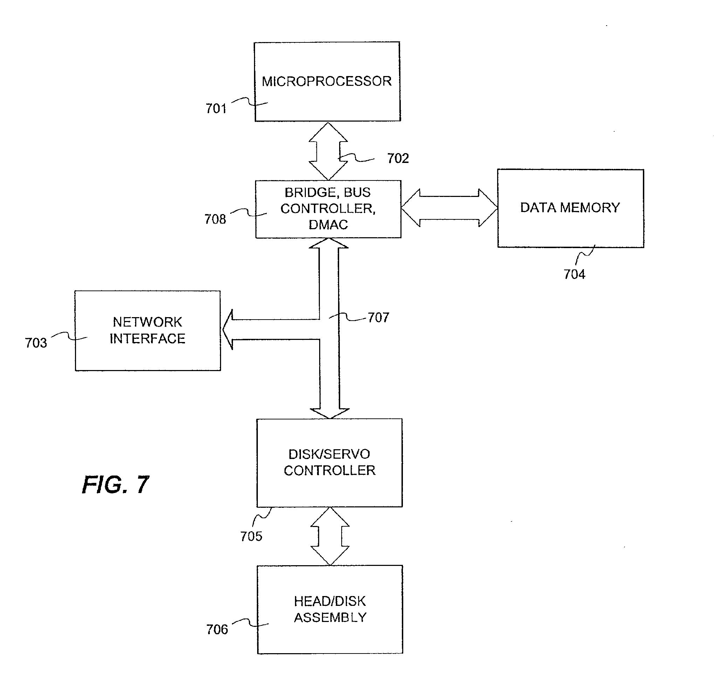

Fig. 7 shows another alternative embodiment of the present invention in functional block-diagram form. In the embodiment of Fig. 7, a host bus 702 and a system bus 707 are implemented. While somewhat more complex, the embodiment of Fig. 7 allows more use of conventional devices such as a conventional microprocessor, bridge device 708, and PCI system bus components. A rich variety of PCI-compatible components such as network interface device 703 may be coupled to bus 707. Bridge device 708 may be implemented as a part of a conventional chip set that interfaces to microprocessor 701 and has a built-in memory interface. Bridge device 708 also implements DMAC functionality and a bus controller for a conventional PCI bus. In this manner, memory transfers between data memory 704 and disk/servo controller 705 can be readily conducted without consuming resources in microprocessor 701. As in the other embodiments, disk/servo controller 705 receives commands and data from bus 707 and implements the signaling to the motors and head electronics within head/disk assembly 706.

Although the invention has been described and illustrated with a certain degree of particularity, it is understood that the present disclosure has been made only by way of example, and that numerous changes in the combination and arrangement of parts can be resorted to by those skilled in the art without departing from the spirit and scope of the invention, as hereinafter claimed.

## Claims

1. A computing system comprising:
a processor having a data/control bus interface;
a data/control bus implementing one or more device communication channels;
a data memory coupled to the processor;
a mass storage device having an interface for communicating mass storage transactions; and
a controller having a memory interface coupled to the data memory and a mass storage interface coupled to the mass storage device's interface and operable to conduct mass storage transactions between the data memory and the mass storage device.

2. The computing system of claim 1 wherein the data memory is coupled to the processor by a memory bus operating independent of the data/control bus.

3. The computing system of claim 2 wherein the controller comprises a memory access controller coupled to the processor, the data memory, and the mass storage device and operable to arbitrate accesses to the data memory between the mass storage and the processor.

4. The computing system of claim 2 wherein the controller comprises a direct memory access controller coupled to the data/control bus, wherein the mass storage interface comprises a logical connection formed using one of the device communication channels.

5. The computing system of claim 1 wherein the data memory is coupled to the data/control bus.

6. The computing system of claim 5 wherein the controller comprises a direct memory access controller coupled to the data/control bus and the memory interface comprises a logical connection formed using one of the device communication channels.

7. The computing system of claim 1 further comprising storage controller processes and application behavior processes implemented using the processor.

8. The computing system of claim 7 wherein the storage controller processes map storage requests generated by the application behavior processes expressed in logical geometry terms into storage requests expressed in physical geometry terms.

9. The computing system of claim 1 wherein the data memory includes logic that map storage requests generated by the processor expressed in logical geometry terms into storage requests expressed in physical geometry terms.

10. The computing system of claim 1 wherein the processor implements data structures storing physical geometry information about the mass storage device.

11. The computing system of claim 1 wherein the data/control bus comprises at least one direct memory access (DMA) channel.

12. The computing system of claim 1 wherein the controller is integrated with the processor on a single integrated circuit chip.

13. The computing system of claim 1 wherein the mass storage device's interface comprises one of:
a small computer systems interface (SCSI) standard-compliant interface;
a universal serial bus (USB) standard-compliant interface;
an IEEE 1394 standard-compliant interface; and
a peripheral component interconnect (PCI) standard-compliant interface.

14. The computing system of claim 1 wherein the mass storage device comprises:
a spinning disk having magnetic storage media provided on at least one surface;
a head for accessing data stored in the magnetic storage media;
an actuator mechanism for moving the head relative to the magnetic storage media in response to commands;
a servo controller coupled to receive requests transferred from the data memory by the controller and generate the commands to the actuator mechanism.

15. The computing system of claim 14 wherein the mass storage device's interface is implemented by the servo controller and implements a physical interface to the data/control bus and a physical interface to the head and actuator mechanism.

16. The computing device of claim 1 wherein the computing device comprises a set-top box including processes for implementing audio/video behaviors in the processor.

17. The computing device of claim 1 wherein the computing device comprises a network appliance having a network controller coupled to the data/control bus.

18. The computing device of claim 1 wherein the mass storage device comprises one of an optical storage device and a magneto-optical storage device.

19. A mass storage device comprising:
a surface for storing data;
a head for accessing the stored data;
a storage controller executing requests for positioning the head at specified locations with respect to the surface and accessing data at the specified location, wherein the storage controller includes processing resources for executing non-storage related program code.

20. The mass storage device of claim 19 further comprising a rotating disk having the surface for storing data formed thereon.

21. The mass storage device of claim 20 further comprising:
an actuator coupled to the head for moving the head to specified locations over the disk's surface in response to commands generated by the storage controller.

22. The mass storage device of claim 19 further comprising a tape having the surface for storing data formed thereon.

23. A computing system architecture comprising:
a data processor executing both storage control processes and general-purpose processes;
a data memory coupled to the data processor to implement memory transactions generated by the data processor; and
a mass storage device having an interface communicating with the storage control processes through the data memory.

24. A method for operating a computing system comprising:
providing a data processing system for executing instructions to manipulate data according to the executed instruction;
coupling stored instructions to the data processor;
storing in memory accessible to the processor parameters describing a physical geometry of a mass storage system; and
executing both storage-related instructions and application related instructions in the same processor.

25. The method of claim 24 wherein the storage-related instructions include at least one of instructions using the physical geometry parameters; and
instructions implementing read channel functionality.
